# EUROPÄISCHE PATENTSCHRIFT

(11) **EP 2 869 326 B1**
(45) Veröffentlichungstag und Bekanntmachung des Hinweises auf die Patenterteilung: **21.02.2018**
(21) Anmeldenummer: 14190714.7
(22) Anmeldetag: 28.10.2014
(51) Int. Cl.: H01H 37/04, H02B 1/052

(54) **Thermostateinheit**
Thermostat unit
Unité de thermostat

(30) Priorität: 29.10.2013 DE 102013111925; 29.10.2013 US 201361896775 P
(43) Veröffentlichungstag der Anmeldung: 06.05.2015
(73) Patentinhaber: DBK David + Baader GmbH, Nordring 26 76761 Rülzheim (DE)
(72) Erfinder: Claber, Katherine, Billingshurst, West Sussex, RH14 9LQ (GB); Silk, Gary, Greenville, South Carolina 29303 (US)
(74) Vertreter: Winter, Brandl, Fürniss, Hübner, Röss, Kaiser, Polte - Partnerschaft mbB

(56) Entgegenhaltungen:
- EP-A1- 0 357 472
- DE-A1-102006 003 570
- Stego: "Twin Thermostat - Technical Data ZR 011", , 23. Januar 2006 (2006-01-23), Seiten 1-1, XP055155389, Gefunden im Internet: URL:http://www.farnell.com/datasheets/1658 242.pdf [gefunden am 2014-11-27]
- Stego: "Electronic Hygrotherm ETF 012", , 16. August 2010 (2010-08-16), Seiten 1-1, XP055155236, Gefunden im Internet: URL:http://www.farnell.com/datasheets/1256 374.pdf [gefunden am 2014-11-26]

## Beschreibung

Die Erfindung betrifft eine Thermostateinheit gemäß dem Oberbegriff des Patentanspruches 1.

Derartige Thermostateinheiten, über die eine Temperaturregelung folgend einer Umgebungstemperatur erfolgt, werden zur Steuerung von elektrischen Verbrauchern, wie beispielsweise Heizern oder Lüftern, verwendet.

Üblicherweise erfolgt die Temperaturregelung über Bimetallthermostaten, bei denen man sich unterschiedliche Wärmeausdehnungskoeffizienten eines Bimetallelementes zu Nutze macht, um einen Kontakt temperaturabhängig zu schalten.

Derartige Bimetallthermostate sind mit einem Einstellelement versehen, über das der Betriebspunkt des Thermostaten einstellbar ist. Beispielsweise werden derartige Bimetallthermostaten in einem Schaltschrank montiert, wobei dieser DIN-Schienen, auch Hutschienen oder DIN-Rails genannt, aufweist, auf denen der Thermostat und ggf. auch andere Regel-/Schaltelemente, beispielsweise Relais, Schalter, Zeitschaltuhren oder Sicherungsautomaten montiert werden. Diese DIN-Schienen sind normiert (beispielsweise EN60715), so dass die Befestigung der oben genannten Regelelemente über einheitlich ausgeführte Befestigungsmittel erfolgen kann.

Es ist bekannt, Thermostateinheiten über Clipelemente auf eine derartige Schiene aufzuclipsen. Um beispielsweise einen Lüfter und einen Heizer anzusteuern, müssen zwei derartige Thermostateinheiten vorgesehen werden, die beispielsweise bei steigender Temperatur öffnen (NC) oder schließen (NO), so dass eine temperaturabhängige Ansteuerung der elektrischen Verbraucher gewährleistet ist. Dementsprechend müssen zumindest zwei derartiger Thermostateinheiten montiert werden, was einen erheblichen Montageaufwand und Bauraum erfordert.

Zur Überwindung dieses Nachteils sind Thermostateinheiten bekannt, bei denen zwei Thermostate in einem gemeinsamen Gehäuse aufgenommen sind und somit durch einen Arbeitsgang an der DIN-Schiene befestigt werden können. Derartige Thermostateinheiten sind als "Zwillings-Thermostate" unter www.pfannenberg.de beschrieben. Da bei derartigen Thermostateinheiten zwei Thermostate in einem gemeinsamen Gehäuse aufgenommen sind, ist der vorrichtungstechnische Aufwand gegenüber den eingangs genannten Lösungen mit getrennten Gehäusen verringert. Des Weiteren ist die Montage vereinfacht, da beide Thermostate gemeinsam durch einen Arbeitsgang auf der DIN-Schiene festgelegt werden können.

Von der Firma STEGO ist unter der Bezeichnung Dual Thermostat ZR011 eine Kombination von zwei Thermostaten bekannt, die auf einer normierten Schiene montiert wird. Die beiden Thermostaten sind - wie auch die beiden zugeordneten Drehknöpfe - entlang der Schiene nebeneinander angeordnet.

In der EP 0 357 472 ist eine Anordnung von zwei elektrischen Schaltvorrichtungen an einer normierten Schiene offenbart, wobei die beiden Schaltvorrichtungen quer zur Schiene nebeneinander angeordnet sind.

Nachteilig bleibt jedoch, dass die beiden nebeneinander liegenden, in einem gemeinsamen Gehäuse aufgenommenen Thermostate auf der Schiene relativ viel Platz benötigen, so dass der Bauraum für weitere Regelkomponenten beschränkt wird.

Dem gegenüber liegt der Erfindung die Aufgabe zugrunde, eine Thermostateinheit mit verringertem Bauraum zu schaffen.

Diese Aufgabe wird durch eine Thermostateinheit mit den Merkmalen des Patentanspruches 1 gelöst.

Vorteilhafte Weiterbildungen der Erfindung sind Gegenstand der Unteransprüche.

Die erfindungsgemäße Thermostateinheit hat zumindest zwei Thermostate, die an einer normierten Schiene gehalten sind, an der auch weitere elektrische Bauelemente befestigbar sind. Erfindungsgemäß sind die beiden Thermostate der Thermostateinheit quer zur Schienenachse neben-/übereinander liegend angeordnet, so dass die von den Thermostaten aufgespannte Thermostatachse im Wesentlichen senkrecht zur Schienenachse verläuft.

Mit anderen Worten gesagt, die beiden Thermostate werden mit Bezug zur Schiene quer dazu übereinander liegend montiert, so dass gegenüber einer Lösung mit einem einzigen Thermostat auf der Schiene nicht oder nur unwesentlich mehr Platz benötigt wird. Es verbleibt somit genügend Platz auf der Schiene, um die weiteren elektrischen Betriebsmittel (Relais, etc.) zu montieren.

Erfindungsgemäß sind die beiden Thermostate mit einem gemeinsamen Gehäuse ausgeführt, das vorzugsweise Verriegelungselemente zum Verriegeln mit der Schiene hat. Dies ermöglicht eine einfache Montage, da lediglich das gemeinsame Gehäuse an die Schiene angesetzt werden muss.

Erfindungsgemäß wird jeder Thermostat mit einem Drehknopf zur Einstellung der jeweiligen Betriebstemperatur oder des zu regelnden Betriebsparameters ausgebildet. Diese Drehknöpfe sind nebeneinander liegend an einer von der Schiene abgewandten Großfläche des Gehäuses angeordnet.

Die Verriegelungselemente können beispielsweise mit Positionierstücken einerseits und Rastelementen andererseits ausgeführt sein, die in Wirkeingriff mit Seitenwangen der Schiene bringbar sind.

Dabei ist es besonders bevorzugt, wenn die Verriegelungselemente mit zwei eine Seitenwange abschnittsweise umgreifenden Positionierstücken einerseits und zwei die andere Seitenwange clipsartig umgreifenden Rastelementen ausgeführt sind.

Dieses Gehäuse wird in vorteilhafter Weise mit Einführungen für Kabel bzw. Litzen zur Kontaktierung der Thermostate ausgebildet.

Des Weiteren können am Gehäuse Zugriffsöffnungen zur Verschraubung der Kabel an Kontaktblöcken vorgesehen sein.

Diese Zugriffsöffnungen können paarweise in einer von der Schiene abgewandten Gehäusegroßfläche münden und sind insbesondere benachbart zu einer Gehäuseschmalseite angeordnet, so dass die beiden Drehknöpfe der Thermostate zwischen den Zugriffsöffnungs-Paaren angeordnet sind.

Bei einem Ausführungsbeispiel der Erfindung ist das Gehäuse mehrteilig mit einem Gehäuseunterteil, das die beiden Thermostate trägt und einem Gehäusedeckel ausgeführt, der mit dem Gehäuseunterteil verrastet ist und Ausnehmungen für die Drehknöpfe hat.

Das Gehäuseunterteil kann Pins zum Fixieren der Thermostate aufweisen.

Bei einem besonders bevorzugten Ausführungsbeispiel der Erfindung ist das Gehäuse durch Spritzgießen hergestellt und kann Ausnehmungen zur Vermeidung von Materialanhäufungen aufweisen.

Die Thermostateinheit kann mit Thermostaten gleicher oder unterschiedlicher Bauart ausgeführt sein. So können beispielsweise ein "Öffner" und ein "Schließer" zur Regelung eines Lüfters und einer Heizung vorgesehen werden. Prinzipiell können jedoch auch Thermostate gleicher Bauart, wie zwei Öffner oder zwei Schließer verwendet werden.

Ein bevorzugtes Ausführungsbeispiel der Erfindung wird im Folgenden anhand schematischer Zeichnungen näher erläutert. Es zeigen:
Figur 1 eine dreidimensionale Ansicht einer erfindungsgemäßen Thermostateinheit;
Figur 2 eine Vorderansicht der Thermostateinheit gemäß Figur 1;
Figur 3 eine dreidimensionale Rückansicht der Thermostateinheit, eingeclipst auf die DIN-Schiene;
Figur 4 die Thermostateinheit gemäß Figur 1 mit abgenommenem Gehäusedeckel und
Figur 5 ein Gehäuseunterteil der Thermostateinheit gemäß Figur 4.

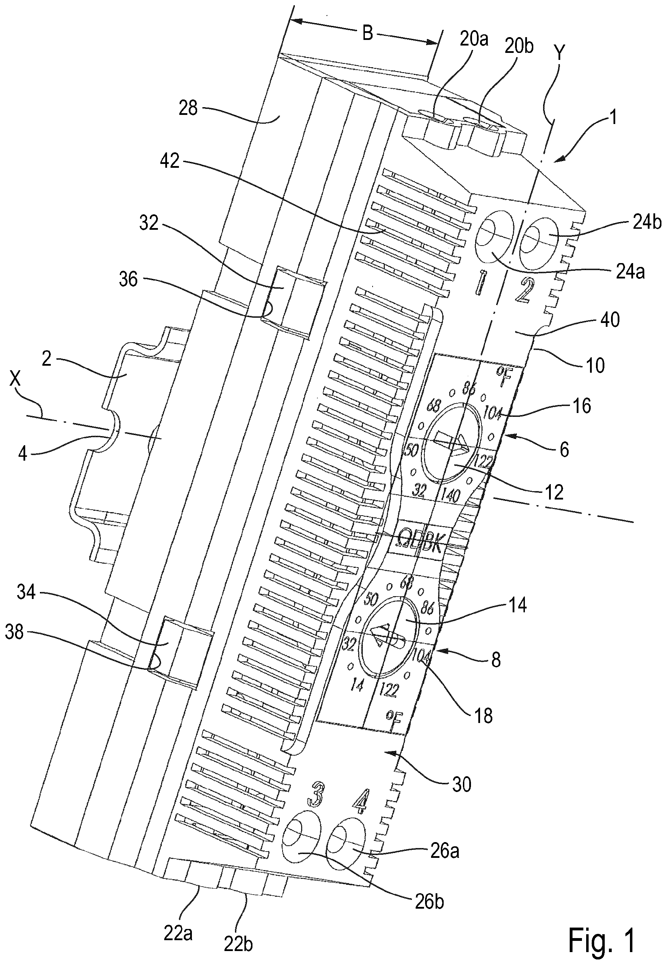

In Figur 1 ist eine Anordnung dargestellt, bei der eine Thermostateinheit 1 an einer DIN-Schiene (Hutschiene, DIN-Rail) 2 angeordnet ist. In dieser Darstellung ist nur ein Teil dieser DIN-Schiene 2 dargestellt, deren Längserstreckung deutlich größer ist als es in Figur 1 dargestellt wird. Derartige Schienen 2 werden über Befestigungsausnehmungen 4 in einem Schaltschrank montiert und tragen dann entsprechende Betriebsmittel, über die elektrische Verbraucher oder dergleichen angesteuert werden können.

Beim erfindungsgemäßen Ausführungsbeispiel ist die Thermostateinheit 1, zu der im Prinzip auch die Schiene 2 gehört, mit zwei Bimetall-Thermostaten 6, 8 ausgeführt, die in einem gemeinsamen Gehäuse 10 angeordnet sind. Dieses wird dann in noch näher beschriebener Weise auf die Schiene 2 aufgeclipt. Die beiden Thermostate 6, 8 sind in der Darstellung gemäß Figur 1 übereinander liegend entlang einer Thermostatachse Y angeordnet, die rechtwinklig zur Schienenachse X verläuft. Die Breite B des Gehäuses, mit anderen Worten gesagt, derjenige Raum, der von der Thermostateinheit 1 auf der Schiene 2 benötigt wird, entspricht im Wesentlichen der Breite eines herkömmlichen Thermostats, wie er eingangs beschrieben ist. Dementsprechend verbleibt für weitere Betriebsmittel mehr Bauraum auf der Schiene 2 als bei der herkömmlichen Lösungen so dass die Raumausnutzung deutlich verbessert ist.

Von den beiden Thermostaten 6, 8 sind bei dem dargestellten Ausführungsbeispiel zwei Drehknöpfe 12, 14 und die zugehörigen Temperatur-Skalen 16, 18 sichtbar. Am Gehäuse 10 sind des Weiteren für jeden Thermostat 6, 8 Einführungen für Kabel bzw. Litzen 20a, 20b bzw. 22a, 22b zur Kontaktierung der Thermostate vorgesehen. Die Befestigung der in die Einführungen 20, 22 eingesetzten Kabel bzw. Litzen erfolgt durch Verschraubung (so genannte Paternoster-Klemmen), wobei die Verschraubung ohne Abnehmen des Deckels durch Zugriffsöffnungen 24a, 24b bzw. 26a, 26b hindurch erfolgt.

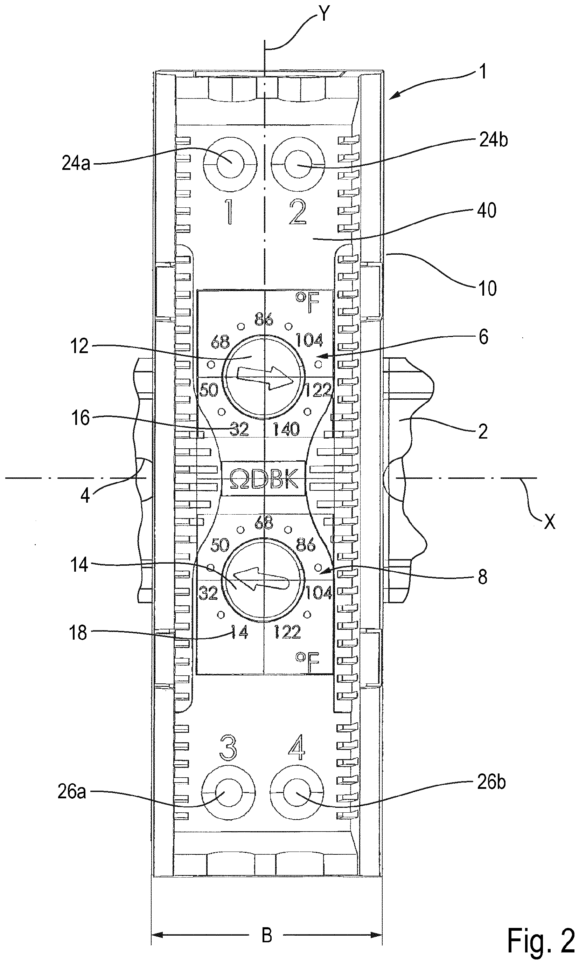

Das Gehäuse 10 ist mit einem im Folgenden noch näher beschriebenen Gehäuseunterteil 28 ausgeführt, auf das ein Gehäusedeckel 30 aufgeclipt wird. Für diese Clipverbindung sind am Gehäuseunterteil 28 Federzungen 32, 34 ausgebildet, die in entsprechende Verriegelungsausnehmungen 36, 38 des Gehäusedeckels 30 eingreifen. Ein Boden des Gehäusedeckels 30 bildet eine Frontseite 40 aus, in der die Zugriffsöffnungen 24, 26 münden und auf die die Skalen 16, 18 aufgebracht sind. Die Drehknöpfe 14, 16 sind von der Frontseite her zugänglich, um die Schalttemperatur für den zugehörigen Verbraucher (Lüfter, Heizung, etc.) einzustellen. Gemäß der Darstellung in den Figuren 1 und 2 sind die Zugrifföffnungspaare 24a, 24b, 26a, 26b benachbart zu den Schmalseiten des Gehäuses 10 angeordnet, so dass entsprechend die Drehknöpfe 12, 14 und die zugehörigen Skalen 16, 18 zwischen diesen zu liegen kommen. Zur thermischen Kopplung der Einheit mit der Umgebung sind am Gehäusedeckel 30 Schlitze 42 vorgesehen.

In Figur 2 sieht man nochmals den erfindungsgemäßen Aufbau, gemäß dem die von den beiden Thermostaten 6, 8 aufgespannte Achse Y rechtwinklig zur Schienenachse X verläuft, wobei lediglich ein Teil der Schiene 2 dargestellt ist.

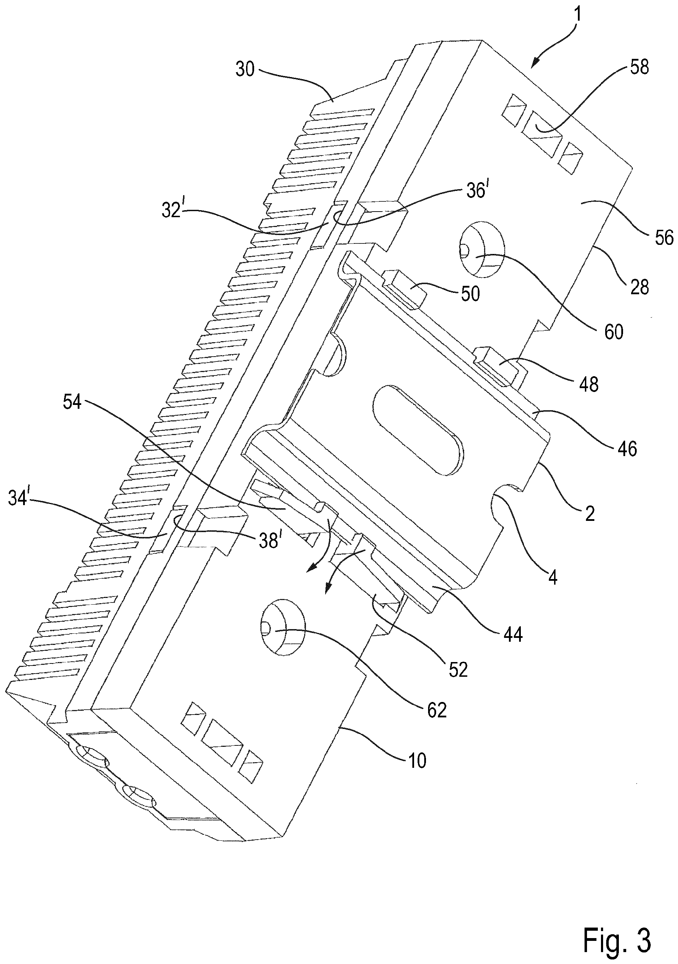

Figur 3 zeigt eine dreidimensionale Ansicht auf die Thermostateinheit 1 von der Rückseite, d.h. von der Befestigungsfläche des Schaltschrankes her. Auch in dieser Darstellung erkennt man recht gut das hutförmige Profil der Schiene 2, wobei die Befestigungsausnehmungen 4 an einer Bodenfläche ausgebildet sind, die am Schaltschrank anliegt. Diese Befestigungsfläche geht über in zwei Seitenwangen 44, 46, an denen das Gehäuse 10 festgeclipt ist. In dieser Darstellung erkennt man auch gut die in Figur 1 nicht sichtbaren Federzungen 32', 34', die in entsprechende Verriegelungsausnehmungen 36', 38' eingreifen, um das Gehäuseunterteil 28 mit dem Gehäusedeckel 30 zu verrasten.

Die Befestigung des Gehäuses 10 an der Schiene 2 erfolgt über Verriegelungselemente, die beim dargestellten Ausführungsbeispiel aus zwei Positionierstücken 48, 50 einerseits und zwei federnden Rastelementen 52, 54 andererseits bestehen. Diese Verriegelungselemente kragen aus einem Boden 56 des Gehäuseunterteils 28 hin zur Schiene 2 aus. Die beiden Positionierstücke 48, 50 sind so ausgebildet, dass sie die Seitenkante der Seitenwange 46 formschlüssig umgreifen. Die beiden gegenüber liegenden Rastelemente 52, 54 sind jeweils federnd ausgebildet und lassen sich zum Ansetzen an die Schiene 2 in Pfeilrichtung (Figur 3) zurückschwenken, wobei sie dann nach dem Ansetzen federnd in ihre Verriegelungsposition zurückschnappen, in der die Seitenwange 44 formschlüssig umgriffen ist. Dementsprechend erfolgt das Ansetzen des Gehäuses 10, indem zunächst die beiden Positionierstücke 50, 48 schräg an die Seitenwange 46 der Schiene 2 angesetzt wird. Anschließend wird das Gehäuse 10 zur Schiene 2 hin abgewinkelt und dabei die beiden Rastelemente 52, 54 in Pfeilrichtung ausgelenkt. Nach dem Aufsitzen des Gehäuses 10 auf der Schiene 2 schnappen die beiden Rastelemente 52, 54 dann in ihre dargestellte Verriegelungsposition.

Das Gehäuse 10 mit dem Gehäuseunterteil 28 und dem Gehäusedeckel 30 sind aus Kunststoff, vorzugsweise im Spritzgießverfahren hergestellt, wobei zur Vermeidung von Materialanhäufungen Ausnehmungen 58 vorgesehen sind. Diese Ausnehmungen können jedoch auch werkzeugtechnisch bedingt sein, um Schieber oder dergleichen zur Ausbildung von Hinterschneidungen vorsehen zu können.

Wie im Folgenden noch näher erläutert, sind am Gehäuseunterteil 28 zwei Pins 60, 62 vorgesehen, über die die Thermostate 6, 8 befestigbar sind.

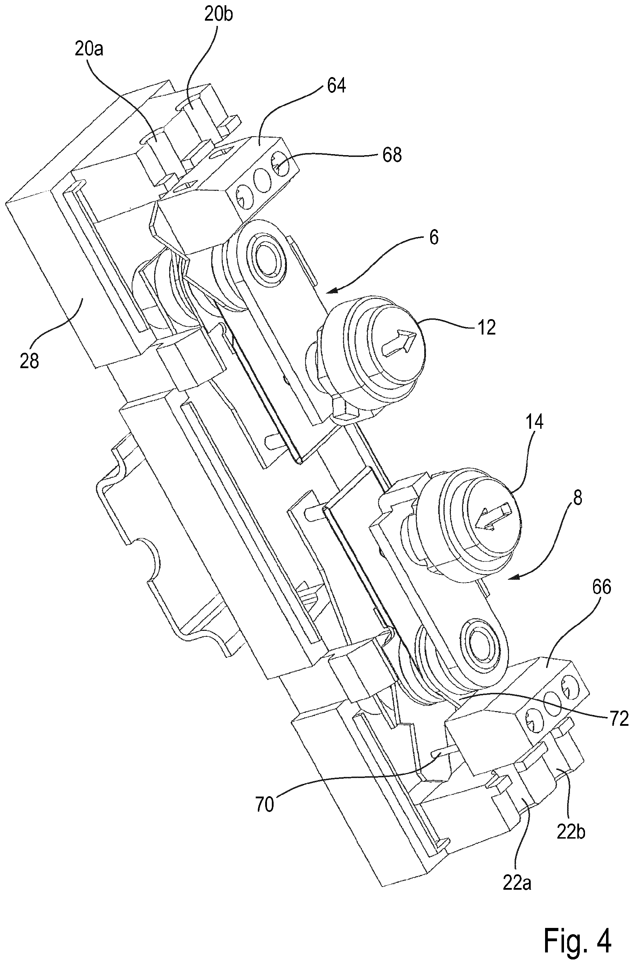

Figur 4 zeigt die Thermostateinheit 1 in einer Ansicht, bei der der Gehäusedeckel 30 abgenommen ist. Man erkennt in dieser Ansicht die beiden Thermostate 6, 8, die am Gehäuseunterteil 28 befestigt sind. Ebenfalls gut sichtbar sind die Einführungen 20a, 20b und 22a, 22b für Kabel bzw. Litzen zur Kontaktierung der Thermostate 6, 8. Durch diese Einführungen 20, 22 können Kabel hin zu einem Anschlussblock 64 bzw. 66 geführt werden. Mittels dieses Anschlussblocks werden die Kabel durch Verschrauben kontaktiert, wobei die in Figur 4 sichtbaren Schrauben 68 jedes Anschlussblocks 64, 66 durch die zugeordneten Zugriffsöffnungen 24, 26 zugänglich sind, so dass die Kontaktierung/Verschraubung äußerst einfach von der Frontseite der Thermostateinheit 1 her erfolgen kann.

Die Thermostate 6, 8 sind in an sich bekannter Weise als Bimetall-Thermostate ausgeführt. Deren Aufbau ist in dem eingangs beschriebenen Stand der Technik erläutert, so dass der Einfachheit halber hinsichtlich des Grundaufbaus derartiger Bimetall-Bauelemente auf die Offenbarung dieser Druckschriften verwiesen werden kann.

Die Drehknöpfe zur Einstellung des Betriebspunktes und die entsprechenden Stellelemente an den Thermostaten 6, 8 sind in geeigneter Weise mit Abflachungen oder Fasen ausgeführt, um sicherzustellen, dass die Drehknöpfe winkelrichtig aufgesetzt werden. Derartige Positionierelemente sind an sich bekannt, so dass auf eine eigene Darstellung verzichtet wird.

Die Kontaktierung der Thermostate 6, 8 von den Anschlussblöcken 66, 68 her erfolgt über elektrische Verbindungen 70,72 die in Figur 4 angedeutet sind.

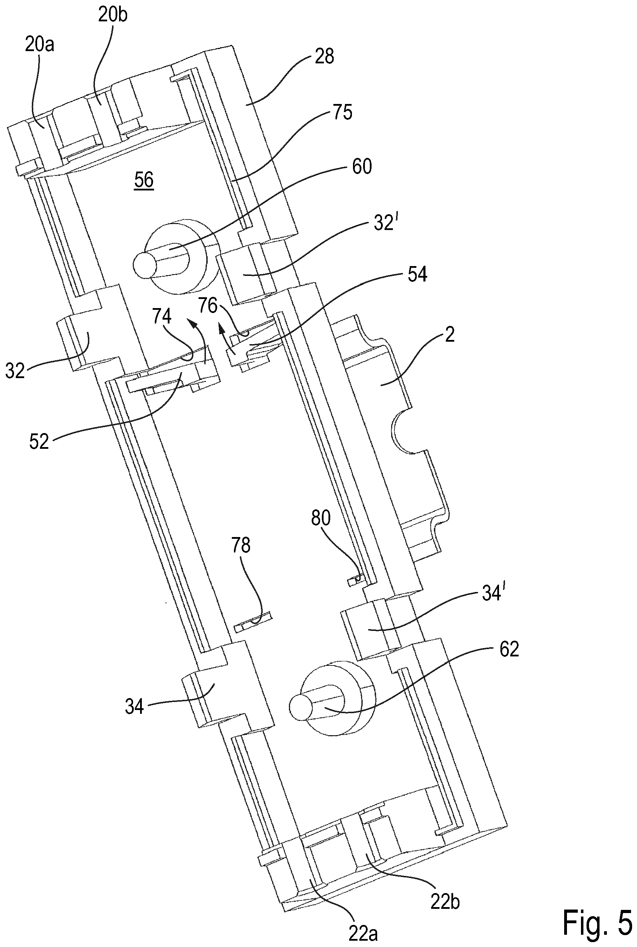

Figur 5 zeigt eine Ansicht des Gehäuseunterteils 28 ohne Thermostate 6, 8 und in einem an die Schiene 2 angeclipten Zustand. In dieser Ansicht sieht man die vier Federzungen 32, 34 und 32', 34', die zur Befestigung des Gehäusedeckels 30 dienen. Des Weiteren sichtbar ist ein Flanschrand 75, auf den die offene Umfangswandung des Gehäusedeckels 30 aufgesetzt wird. Aus dem Boden 56 des Gehäuseunterteils 28 kragen die beiden auch in Figur 3 sichtbaren Pins 60, 62 aus, auf die die beiden Thermostate 6, 8 aufgesetzt werden. Im Boden 56 sind des Weiteren die beiden Rastelemente 52, 54 ausgebildet. Diese sind durch Ausnehmungen 74, 76 frei geschnitten, um die vorstehend beschriebene Auslenkung zum Verrasten mit der Schiene 2 zu ermöglichen. Diese Auslenkung ist in Figur 5 nochmals mit Pfeilen angedeutet. Im Boden 56 münden des Weiteren zwei Freischnitte 78, 80, durch die hindurch werkzeugseitige Schieber zur Ausbildung der Positionierstücke 58, 50 tauchen.

Die erfindungsgemäße Anordnung spart erheblichen Bauraum an der Schiene 2, so dass bei geringem vorrichtungstechnischen und montagetechnischen Aufwand mehr elektrische Bauelemente an einer DIN-Schiene 2 befestigbar sind, als dies beim Stand der Technik der Fall ist.

Offenbart ist eine Thermostateinheit mit zumindest zwei Thermostaten, die an einer normierten Schiene gehalten sind. Die beiden Thermostate sind quer zur Schienenachse angeordnet.

### Bezugszeichenliste:

- 1: Thermostateinheit
- 2: DIN-Schiene
- 4: Ausnehmung
- 6: Thermostat
- 8: Thermostat
- 10: Gehäuse
- 12: Drehknopf
- 14: Drehknopf
- 16: Skala
- 18: Skala
- 20: Einführung
- 22: Einführung
- 24: Zugriffsöffnung
- 26: Zugriffsöffnung
- 28: Gehäuseunterteil
- 30: Gehäusedeckel
- 32: Federzunge
- 34: Federzunge
- 36: Verriegelungsausnehmung
- 38: Verriegelungsausnehmung
- 40: Frontseite
- 42: Schlitz
- 44: Seitenwange
- 46: Seitenwange
- 48: Positionierstück
- 50: Positionierstück
- 52: Rastelement
- 54: Rastelement
- 56: Boden
- 58: Ausnehmung
- 60: Pin
- 62: Pin
- 64: Anschlussblock
- 66: Anschlussblock
- 68: Schraube
- 70: elektrische Verbindung
- 72: elektrische Verbindung
- 74: Ausnehmung
- 75: Flanschrand
- 76: Ausnehmung
- 78: Freischnitt
- 80: Freischnitt

## Patentansprüche

1. Thermostateinheit mit zumindest zwei Thermostaten (6, 8), die an einer normierten Schiene (2) befestigbar sind, an der auch weitere elektrische Bauelemente befestigbar sind, wobei die Thermostate (6, 8) mit einem gemeinsamen Gehäuse (10) ausgeführt sind, **dadurch gekennzeichnet, dass** die Thermostate (6, 8) quer zur Schienenachse (X) neben einander liegend angeordnet sind, so dass eine von den Thermostaten (6, 8) aufgespannte Thermostatachse (Y) im Wesentlichen senkrecht zu der Schienenachse (X) verläuft, wobei jeder Thermostat (6, 8) einen Drehknopf (12, 14) hat, wobei beide Drehknöpfe (12, 14) neben einander liegend quer zur Schienenachse (X) an einer von der Schiene (2) abgewandten Frontseite (40) des Gehäuses (10) angeordnet sind.

2. Thermostateinheit nach Patentanspruch 1, wobei das Gehäuse (10) Verriegelungselemente zum Befestigen an der Schiene (2) hat.

3. Thermostateinheit nach Patentanspruch 2, wobei die Verriegelungselemente Positionierstücke (48, 50) einerseits und Rastelemente (52, 54) andererseits aufweisen, die in Wirkeingriff mit Seitenwangen (44, 46) der Schiene (2) bringbar sind.

4. Thermostateinheit nach Patentanspruch 3, wobei zwei eine Seitenwange (46) abschnittsweise umgreifende Positionierstücke (48, 50) und zwei die andere Seitenwange (44) abschnittsweise umgreifende Rastelemente (52, 54) vorgesehen sind.

5. Thermostateinheit nach einem der vorhergehenden Patentansprüche, wobei am Gehäuse (10) Einführungen (20, 22) für Kabel oder Litzen zur Kontaktierung der Thermostate (6, 8) und Zugriffsöffnungen (24, 26) zur Verschraubung der Kabel an Anschlussblöcken (64, 66) vorgesehen sind.

6. Thermostateinheit nach einem der vorhergehenden Patentansprüche, wobei die Zugriffsöffnungen (24, 26) paarweise an der von der Schiene (2) abgewandten Frontseite (40), insbesondere benachbart zu einer Gehäuseschmalseite angeordnet sind, so dass die Drehknöpfe (12, 14) der beiden Thermostate (6, 8) zwischen den zugehörigen Zugriffsöffnungen (24, 26) angeordnet sind.

7. Thermostateinheit nach einem der vorhergehenden Patentansprüche, wobei das Gehäuse (10) mehrteilig mit einem Gehäuseunterteil (28) und einem Gehäusedeckel (30) ausgebildet ist, der mit dem Gehäuseunterteil (28) verrastet ist und Ausnehmungen für die Drehknöpfe (12, 14) hat.

8. Thermostateinheit nach Patentanspruch 7, wobei das Gehäuseunterteil (28) Pins (60, 62) zur Befestigung der Thermostate (6, 8) hat.

9. Thermostateinheit nach einem der vorhergehenden Patentansprüche, wobei das Gehäuse (10) durch Spritzgießen hergestellt ist und Ausnehmungen zur Vermeidung von Materialanhäufungen oder werkzeugtechnisch bedingte Ausnehmungen hat.

10. Thermostateinheit nach einem der vorhergehenden Patentansprüche, wobei die Thermostate gleicher oder unterschiedlicher Bauart (Schließer/Öffner) sind.

11. Thermostateinheit nach Patentanspruch 10, wobei die Thermostate (6, 8) zur Steuerung eines elektrischen Verbrauchers wie eines Lüfters und einer Heizung ausgelegt sind.

## Claims

1. Thermostat unit having at least two thermostats (6, 8), which are fixable at a normed rail (2), at which also further electrical components are fixable, wherein the thermostats (6, 8) are embodied with a joint housing (10), **characterized in that** the thermostats (6, 8) adjacently arranged are orientated transversely to the rail axis (X), so that a thermostat axis (Y) spanned by the thermostats (6, 8) runs essentially perpendicular to the rail axis (X), wherein each thermostat (6, 8) has a turning knob (12, 14), wherein both turning knobs (12, 14) are arranged transversely to the rail axis (X) adjacently at a front side (40) of the housing (10) facing away from the rail (2).

2. Thermostat unit according to patent claim 1, wherein the housing (10) has locking elements for fixation to the rail (2).

3. Thermostat unit according to patent claim 2, wherein the locking elements comprise positioning pieces (48, 50) on the one hand and latch elements (52, 54) on the other hand, which are operatively engagable with side plates (44, 46) of the rail (2).

4. Thermostat unit according to patent claim 3, wherein two positioning pieces (48, 50) which sectionally encompass a side plate (46) and two latch elements (52, 54) which sectionally encompass the other side plate (44) are provided.

5. Thermostat unit according to one of the preceding patent claims, wherein inlets (20, 22) for cables or litz wires for contacting of the thermostats (6, 8) are provided at the housing (10), and access openings (24, 26) for screwing the cables to terminal blocks (64, 66) are provided.

6. Thermostat unit according to one of the preceding patent claims, wherein the access openings (24, 26) are arranged in pairs at the front side (40) facing away from the rail (2), in particular adjacent to a minor side of the housing, such that the turning knobs (12, 14) of the two thermostats (6, 8) are arranged between associated access openings (24, 26).

7. Thermostat unit according to one of the preceding patent claims, wherein the housing (10) is embodied in several parts with a housing base part (28) and a housing cover (30), which is latched onto the housing base part (28) and has recesses for the turning knobs (12, 14).

8. Thermostat unit according to patent claim 7, wherein the housing base part (28) has pins (60, 62) for fixation of the thermostats (6, 8).

9. Thermostat unit according to one of the preceding patent claims, wherein the housing (10) is made by injection molding and has recesses for preventing material accumulation or has tool-related recesses.

10. Thermostat unit according to one of the preceding patent claims, wherein the thermostats are of the same type or of different types (closer/opener).

11. Thermostat unit according to patent claim 10, wherein the thermostats (6, 8) are configured to control an electrical consumer such as a fan and a heater.

## Revendications

1. Unité de thermostat avec au moins deux thermostats (6, 8), qui peuvent être fixés à un rail normalisé (2), sur lequel peuvent également être fixés deux autres composants électriques, les thermostats (6, 8) étant réalisés avec un boîtier commun (10), **caractérisée en ce que** les thermostats (6, 8) sont disposés l'un à côté de l'autre transversalement par rapport à l'axe du rail (X), de façon à ce qu'un axe de thermostat (Y) tracé à partir des thermostats (6, 8) s'étende globalement perpendiculairement à l'axe du rail (X), chaque thermostat (6, 8) comprenant une tête rotative (12, 14), les deux boutons rotatifs (12, 14) étant disposés l'une à côté de l'autre transversalement par rapport à l'axe de rail (X) sur un côté frontal (40), opposé au rail (2), du boîtier (10).

2. Unité de thermostat selon la revendication 1, le boîtier (10) comprenant des éléments de verrouillage pour la fixation au rail (2).

3. Unité de thermostat selon la revendication 2, les éléments de verrouillage comprenant des pièces de positionnement (48, 50) d'une part et des éléments d'encliquetage (52, 54) d'autre part, qui peuvent être mis en liaison fonctionnelle avec des joues latérales (44, 46) du rail (2).

4. Unité de thermostat selon la revendication 3, deux pièces de positionnement (48, 50) enserrant partiellement une joue latérale (46) et deux éléments d'encliquetage (52, 54) enserrant partiellement l'autre joue latérale (44) étant prévus.

5. Unité de thermostat selon l'une des revendications précédentes, des guidages (20, 22) pour des câbles ou des torons étant prévues sur le boîtier (10) pour la mise en contact des thermostats (6, 8) ainsi que des ouvertures d'accès (24, 26) pour le vissage des câbles à des borniers (64, 66).

6. Unité de thermostat selon l'une des revendications précédentes, les ouvertures d'accès (24, 26) étant disposées par paires sur le côté frontal (40) opposé au rail (2), plus particulièrement à proximité d'un côté étroit du boîtier, de façon à ce que les boutons rotatifs (12, 14) des deux thermostats (6, 8) soient disposés entre les ouvertures d'accès (24, 26) correspondantes.

7. Unité de thermostat selon l'une des revendications précédentes, le boîtier (10) étant conçu en plusieurs parties, avec une partie inférieure de boîtier (28) et un couvercle de boîtier (30), qui est encliqueté avec la partie inférieure du boîtier (28) et qui présente des évidements pour les boutons rotatifs (12, 14).

8. Unité de thermostat selon la revendication 7, la partie inférieure du boîtier (28) comprenant des broches (60, 62) pour la fixation des thermostats (6, 8).

9. Unité de thermostat selon l'une des revendications précédentes, le boîtier (10) étant fabriqué par moulage par injection et comprenant des évidements empêchant l'accumulation de matériau ou des évidements permettant le passage d'outils.

10. Unité de thermostat selon l'une des revendications précédentes, les thermostats étant de même type ou de types différents (contact de fermeture/contact d'ouverture).

11. Unité de thermostat selon la revendication 10, les thermostats (6, 8) étant conçus pour la commande d'un consommateur électrique comme un ventilateur ou un chauffage.
